# EUROPÄISCHE PATENTSCHRIFT

(11) **EP 1 708 011 B1**
(45) Veröffentlichungstag und Bekanntmachung des Hinweises auf die Patenterteilung: **30.11.2011**
(21) Anmeldenummer: 06004759.4
(22) Anmeldetag: 08.03.2006
(51) Int. Cl.: G02C 5/22

(54) **Brillenfassung**
Spectacle frame
Monture de lunettes

(30) Priorität: 30.03.2005 DE 102005014512
(43) Veröffentlichungstag der Anmeldung: 04.10.2006
(73) Patentinhaber: Rodenstock GmbH, 80469 München (DE)
(72) Erfinder: Wandinger, Jakob, 84478 Waldkraiburg (DE)
(74) Vertreter: Müller-Boré & Partner Patentanwälte

(56) Entgegenhaltungen:
- CH-A- 402 449
- FR-A- 1 526 265
- GB-A- 933 207
- US-A- 3 874 775
- US-A- 6 086 200
- US-B1- 6 454 406
- US-B1- 6 464 353

## Beschreibung

Die vorliegende Erfindung betrifft eine Brillenfassung.

Bei der Entwicklung von Brillengläsern werden eine Vielzahl von Parametern berücksichtigt. Zur Berechnung progressiver Brillengläser ist beispielsweise Kenntnis von sogenannten Individualparametern des Brillenträgers notwendig. Die Individualparameter beinhalten unter anderem Zentrierpunkt, Fassungsscheibenwinkel und Vorneigungswinkel der Brillengläser. Werden die Brillengläser in Kenntnis der Individualparameter optimiert, ist es notwendig, die Brillengläser bzw. die Brillenfassung derart anzuordnen, daß die zur Berechnung und Optimierung der Brillengläser verwendeten Individualparameter den tatsächlichen Individualparametern entsprechen, welche aufgrund der tatsächlichen Anordnung der Brillenfassung bzw. der Brillengläser in Gebrauchsstellung gegeben sind. Schwierigkeiten können insbesondere dann auftreten, wenn die zur Optimierung verwendeten Individualparameter nicht exakt mit den tatsächlich vorhandenen Individualparametern übereinstimmen, bzw. wenn die Brillenfassung nicht exakt an die zur Optimierung verwendeten Individualparameter anpaßbar ist. Weiterhin sind herkömmlichen Brillenfassungen regelmäßig so ausgelegt, daß sie nicht ohne weiteres an veränderte Individualparameter anpaßbar sind.

US 6 454 406 B1 offenbart eine Brillenfassung, wobei ein Bügel mittels eines Kupplungsblocks ("coupling block") mit einer Fassung verbunden ist. Der Bügel kann um einen Drehzapfen ("pivot rod") relativ zu dem Kupplungsblock gedreht werden. Somit kann der Bügel gegenüber der Fassung verkippt werden.

US 6 086 200 A offenbart eine Brillenfassung mit einem Rahmen ("frame") und einem Bügel ("temple"), wobei der Bügel über ein Winkelanpaßglied ("angle adjusting member") verbindbar ist. Das Winkelanpaßglied kann mittels einer Verzahnung gegenüber dem Rahmen verkippt werden. Somit kann auch der Bügel gegenüber dem Rahmen verkippt werden.

Die FR 2 466 033 offenbart eine Brillenfassung mit zumindest einem Bügel. An einer Backe der Brillenfassung ist ein elastischer Puffer vorgesehen. Der Bügel weist eine Verlängerung auf, die im geschlossenen Zustand des Bügels an einem seitlichen Vorsprung des elastischen Puffers anliegt.

Es ist Aufgabe der Erfindung, eine Brillenfassung bereitzustellen, welche einfach und exakt justiert werden kann.

Diese Aufgabe wird durch eine Brillenfassung gemäß Anspruch 1 gelöst. Bevorzugte Ausführungsformen sind Gegenstand der abhängigen Ansprüche.

Gemäß der vorliegenden Erfindung wird eine Brillenfassung mit zumindest einer Backe und zumindest einem Bügel bereitgestellt, wobei
- der Bügel an der Backe mittels einer Gelenkvorrichtung angelenkt ist, so daß bei geöffnetem Bügel zwischen der Backe und dem Bügel ein Spalt ausgebildet ist,
- die Gelenkvorrichtung zumindest ein Backengelenkelement mit zumindest einem Backenbefestigungsbereich aufweist,
- die Gelenkvorrichtung zumindest ein Bügelgelenkelement mit zumindest einem Bügelbefestigungsbereich aufweist,
   -- der Backenbefestigungsbereich mit der Backe verbunden ist,
   -- der Bügelbefestigungsbereich mit dem Bügel verbunden ist,
   -- das Backengelenkelement drehbar mit dem Bügelgelenkelement verbunden ist,
- zumindest bereichsweise zwischen der Backe und dem damit verbundenen Bügel ein zumindest teilweise rückstellfähiges Zwischenglied angeordnet ist, wobei
der Backenbefestigungsbereich (18) relativ zu dem Bügelbefestigungsbereich (34) verkippbar angeordnet ist, und wobei
das Backengelenkelement (16) derart um ein Drehachse (25) drehbar mit dem Bügelgelenkelement (32) verbunden ist, um ein Öffnen und ein Schließen der Brillenfassung (1) zu ermöglichen und der Backenbefestigungsbereich (18) derart um eine Kippachse (24) verkippbar angeordnet ist, um eine Inklinationsänderung des Bügels (12) zu ermöglichen, wobei
bei geöffnetem Bügel das Zwischenglied derart elastisch verformt ist, daß zumindest eine Seite des Spalts vollständig geschlossen ist.

Der Bügel ist der Teil der Brillenfassung, mittels welchem die Brillenfassung an einem Kopf eines Trägers der Brillenfassung anordenbar ist. Der Bügel wird hierbei insbesondere an dem Ohr des Trägers angeordnet und mit der Brücke drehbar verbunden. Durch Drehen des Bügels relativ zu der Backe kann die Brillenfassung geöffnet und geschlossen werden. Die Backe ist insbesondere ein Teilbereich des der Brillenfassung, an welchem insbesondere ein Brillenglas anordenbar ist.

Vorzugsweise sind das Backengelenkelement und der Backenbefestigungsbereich des Backengelenkelements einstückig ausgebildet. Besonders bevorzugt sind das Backengelenkelement und die Backe einstückig ausgebildet, wobei weiterhin bevorzugt sind die Backe, das Backengelenkelement und der Backenbefestigungsbereich einstückig ausgebildet. Analog sind das Bügelgelenkelement und der Bügelbefestigungsbereich des Bügelgelenkelements einstückig ausgebildet. Besonders bevorzugt sind das Bügelgelenkelement und der Bügel einstückig ausgebildet, wobei weiterhin bevorzugt sind der Bügel, das Bügelgelenkelement und der Bügelbefestigungsbereich einstückig ausgebildet.

Vorzugsweise ist das Zwischenglied derart angeordnet, daß in einem geöffneten Zustand der Brillenfassung das Zwischenglied die Backe und den Bügel jeweils an zumindest einem Punkt kontaktiert.

In einem geöffnetem Zustand der Brillenfassung sind die Bügel der Brillenfassung derart ausgerichtet, daß ein Brillenträger die Brille tragen kann. In einem geschlossenen Zustand der Brillenfassung sind die Bügel vorzugsweise im wesentlichen parallel zu einer Fassungsebene der Brillenfassung angeordnet, bzw. unter einem kleinen Winkel dazu.

Die Fassungsebene im Sinne der vorliegenden Erfindung entspricht im wesentlichen der Fassungsebene, wie sie in einschlägigen Normen wie beispielsweise der DIN EN ISO 8624, der DIN 58208, DIN EN ISO 13666, der DIN 5340 und der DIN EN ISO 8980-2 definiert ist. Ferner wird bei den verwendetet Fachbegriffen zusätzlich zu den genannten Normen weiterhin auf Definitionen in dem Fachbuch "Die Optik des Auges und der Sehhilfen" von Dr. Roland Enders, 1995 Optische Fachveröffentlichung GmbH, Heidelberg, sowie in dem Fachbuch "Optik und Technik der Brille" von Heinz Diepes und Ralf Blendowksi, 2002 Verlag Optische Fachveröffentlichungen GmbH, Heidelberg, verwiesen. Die Normen sowie die genannten Bücher stellen für die Begriffsdefinitionen insoweit einen integralen Offenbarungsbestandteil der vorliegenden Patentanmeldung dar. Die Fassungsebene entspricht insbesondere der Fassungsebene in dem herkömmlichen Kastensystem, welches ebenfalls in den genannten Normen definiert ist.

Der geschlossene Zustand der Brillenfassung ist insbesondere ein Zustand, in welchem die Brillenfassung beispielsweise in einem Brillenetui verstaut und transportiert werden kann. In dem geöffneten Zustand der Brille hingegen sind die Bügel beispielsweise unter einem Winkel von 85° oder mehr zu der Fassungsebene angeordnet. In anderen Worten ist eine Mittellinie des Bügels bzw. eine Bügellängsachse, welche entsprechend der vorgenannten Normen angeordnet ist, unter einem Winkel von 85° oder mehr zu der Fassungsebene angeordnet.

Bei herkömmlichen Brillenfassungen schlägt beispielsweise in einem geöffneten Zustand der Brillenfassung der Bügel an die Backe der Brillenfassung an. Erfindungsgemäß kontaktiert der Bügel die Backe in einem geöffneten Zustand der Brillenfassung vorzugsweise nicht, sondern das Zwischenglied kontaktiert die Backe an zumindest einem Punkt. Ferner kontaktiert das Zwischenglied in einem geöffneten Zustand der Brillenfassung den Bügel an zumindest einem Punkt. Besonders bevorzugt kontaktiert das Zwischenglied den Bügel flächig. Ebenso kann das Zwischenglied auch die Backe flächig kontaktieren. Es ist nicht notwendig, daß das Zwischenglied die Backe vollständig kontaktiert. Vielmehr kann das Zwischenglied lediglich einen Teilbereich der Backe und/oder des Bügels kontaktieren.

Vorzugsweise sind die Kippachse und die Drehachse verschieden zueinander orientiert.

Durch eine Änderung der Inklination des Bügels wird im wesentlichen der Vorneigungswinkel der Brillengläser durch die veränderte Anordnung der Mittellinie des Bügels verändert. Insbesondere wird die Inklination des Bügels in dem geöffneten Zustand der Brillenfassung verändert, wobei der Öffnungszustand der Brille durch das Ändern der Inklination nicht beeinflußt wird. Durch Drehen des Bügels um die Drehachse kann die Brillenfassung hingegen geöffnet und geschlossen werden, wobei die Inklination des Bügels von der Drehung des Bügels um die Drehachse unabhängig ist. Folglich wird die Inklination des Bügels durch Drehen des Bügels um die Drehachse nicht verändert. Anders ausgedrückt wird durch die Drehung der Mittellinie des Bügels um die Drehachse beim Öffnen und Schließen der Brille eine Drehebene aufgespannt, wobei die Kippachse vorzugsweise in der Drehebene angeordnet ist. Beispielsweise kann die Kippachse unter einem Winkel von etwa 90° zu der Mittellinie des Bügels angeordnet sein und in der Drehebene liegen. Die Drehachse hingegen ist nicht in der Drehebene angeordnet, sondern schneidet die Drehebene. Durch Änderung der Inklination des Bügels wird daher, bei fester Fassungsebene im Raum, die Lage der Drehebene im Raum, verändert. Da in Gebrauchsstellung, d.h. beim Tragen der Brillenfassung, jedoch die Orientierung der Mittellinie des Bügels und daher auch der Drehebene festgelegt ist, wird durch Veränderung der Inklination die Orientierung der Fassungsebene, d.h. im wesentlichen der Vorneigungswinkel der Brillengläser, verändert.

Folglich bedeutet die Inklinationsänderung des Bügels im Sinne der Erfindung, einen Schnittwinkel der Drehebene mit der Fassungsebene zu verändern. Dies wird insbesondere dadurch erreicht, daß der Winkel zwischen der Mittellinie des Bügels und der Drehachse verändert wird. Ist die Mittellinie des Bügels in einem ersten Zustand beispielsweise unter einem Winkel von 90° gegen die Drehachse angeordnet, beträgt der Winkel zwischen der Drehachse und der Mittellinie des Bügels nach veränderter Inklination beispielsweise weniger als 90°. Der Winkel zwischen der Mittellinie des Bügels und der Drehachse wird hierbei in einer Ebene gemessen, welche von der Drehachse und der Mittellinie des Bügels aufgespannt wird.

Es ist aber auch möglich, daß bei Veränderung der Inklination des Bügels auch die Lage der Drehachse geändert wird. Folglich bleibt beispielsweise der Winkel zwischen der Drehachse und der Mittellinie des Bügels konstant, die Orientierung der Drehebene relativ zu der Fassungsebene wird jedoch verändert, d.h. der Schnittwinkel der Drehebene mit der Fassungsebene wird verändert.

Bevorzugt ist die Gelenkvorrichtung derart verformbar ausgelegt, um das Verkippen des Backenbefestigungsbereichs relativ zu dem Bügelbefestigungsbereich zu ermöglichen.

Besonders bevorzugt ist die Verformung der Gelenkvorrichtung eine plastische Verformung. Vorteilhafterweise kann, wie oben ausgeführt, der Vorneigungswinkel der Brillengläser individuell angepaßt werden. Aufgrund der plastischen Verformbarkeit der Gelenkvorrichtung kann eine bestimmte Inklination des Bügels eingestellt werden, d.h. der Vorneigungswinkel dauerhaft entsprechend spezifischer Werte des Brillenträgers angepaßt werden. Verändert sich eine optische Fehlsichtigkeit des Brillenträgers derart, daß neue Brillengläser angepaßt werden müssen, wodurch auch ein veränderter Vorneigungswinkel der Brillengläser bedingt sein kann, können neue Brillengläser wieder in dieselbe Brillenfassung eingepaßt werden und der Vorneigungswinkel auf den neuen Wert angepaßt wird. Hierbei muß lediglich die Inklination des Bügels verändert werden. Erfindungsgemäß ist die Inklination vorzugsweise kontinuierlich einstellbar, d.h. die Inklination und somit auch der Vorneigungswinkel kann genau an den zur Optimierung der Brillengläser verwendeten Wert angepaßt werden, wobei aufgrund der plastischen Verformbarkeit der Gelenkvorrichtung die Inklination im wesentlichen konstant ist, bis gegebenenfalls die Inklination aufgrund neuer Brillengläser verändert wird. Eine versehentliche Änderung der Inklination wird vorteilhafterweise vermieden.

Vorzugsweise ist das Backengelenkelement und/oder das Bügelgelenkelement derart verformbar ausgelegt, um ein Verkippen des Backenbefestigungsbereichs relativ zu dem Bügelbefestigungsbereich zu ermöglichen.

In anderen Worten wird lediglich das Backengelenkelement plastisch verformt oder lediglich das Bügelgelenkelement plastisch verformt oder sowohl das Backengelenkelement als auch das Bügelgelenkelement plastisch verformt. Es ist daher möglich, die Inklination des Bügels zu verändern, wenn beispielsweise der Bügel nicht mit der Backe verbunden ist. Ein Optiker kann beispielsweise zur Änderung der Inklination den Bügel von der Backe entfernen, das Bügelgelenkelement und/oder Backengelenkelement plastisch verformen und anschließend den Bügel mit der Backe wieder verbinden, d.h. das Bügelgelenkelement wieder mit dem Backengelenkelement verbinden.

Bevorzugt ist zumindest ein Abschnitt des Zwischenglieds in dem geöffneten Zustand der Brillenfassung formschlüssig zwischen der Backe und dem Bügel angeordnet.

In anderen Worten ist das Zwischenglied derart zwischen der Backe und dem Bügel angeordnet, daß in einem geöffneten Zustand der Brillenfassung ein Spalt zwischen der Backe und dem Bügel zumindest teilweise geschlossen ist. Die Brillenfassung ist insbesondere in Gebrauchsstellung der Brillenfassung in einem geöffneten Zustand, d.h. wenn der Brillenträger die Brillenfassung trägt. Beispielsweise hat der Spalt eine dem Kopf des Trägers zugewandte Seite und eine dem Kopf des Trägers abgewandte Seite. Die dem Kopf des Träges abgewandte Seite ist beim Tragen der Brillenfassung in Gebrauchsstellung von außen sichtbar. Die dem Kopf des Trägers zugewandte Seite der Brillenfassung ist beim Tragen der Brillenfassung in Gebrauchsstellung von außen nicht sichtbar. Das Zwischenglied ist derart angeordnet, daß in einem geöffneten Zustand der Brillenfassung der Spalt zwischen Backe und Bügel zumindest an der dem Kopf des Trägers abgewandten Seite im wesentlichen durch das Zwischenglied vollständig geschlossen ist, d.h. entlang des Spalts an der dem Kopf abgewandten Seite kontaktiert das Zwischenglied sowohl die Backe als auch den Bügel.

Besonders bevorzugt ist die Gelenkvorrichtung ausgelegt, eine Drehung des Bügelgelenkelements relativ zu dem Backengelenkelement zu beschränken.

Insbesondere sind das Backengelenkelement und das Bügelgelenkelement derart ausgebildet, daß in einem vollständig geöffneten Zustand der Brillenfassung eine weitere Drehbewegung des Bügels weg von der Brillenfassung nicht möglich ist. Die Beschränkung der Drehung des Bügels in der Drehebene ist unabhängig von der relativen Kipposition des Backenbefestigungsbereichs zu dem Bügelbefestigungsbereich, wobei die Backe und der Bügel kontaktlos bewegbar angeordnet sind, d.h. ein Spalt zwischen Backe und Bügel vorhanden ist.

Weiterhin vorzugsweise ist das Zwischenglied an der Backe und/oder an dem Bügel angeordnet. Beispielsweise kann das Zwischenstück zweistückig ausgebildet sein. Ein Teil des Zwischenstücks ist hierbei an der Backe angeordnet. Ein weiterer Teil des Zwischenstücks ist an dem Bügel angeordnet. In dem geschlossenen Zustand der Brillenfassung sind die beiden Teile des Zwischenstücks vorzugsweise nicht miteinander in Kontakt. In einem geöffneten Zustand der Brillenfassung kontaktieren die beiden Teile des Zwischenglieds einander. Alternativ können die beiden Teile auch derart an der Backe bzw. dem Bügel angeordnet sein, daß sie in einem geschlossenen Zustand einander nicht kontaktieren und in einem geöffneten Zustand der Brillenfassung in Gebrauchsstellung ein Teil des Zwischenstücks jeweils Bügel und Backe an der dem Kopf zugewandten Seite des Spalts kontaktiert. Ein weiterer Teil des Zwischenstücks kontaktiert jeweils Bügel und Backe an der dem Kopf abgewandten Seite. Die beiden Teile des Zwischenstücks kontaktieren einander vorzugsweise nicht.

Alternativ kann das Zwischenstück auch einstückig ausgebildet sein und sowohl an der Backe als auch an dem Bügel befestigt sein. Die Backe und der Bügel sind vorzugsweise derart angeordnet, daß ein Spalt zwischen Backe und Bügel ausgebildet ist. Der Spalt wird aber im wesentlichen vollständig durch das Zwischenstück geschlossen.

Bevorzugt ist die Kippachse im wesentlichen senkrecht zu einer Mittellinie des Bügels orientiert.

Besonders bevorzugt ist die Kippachse in der Drehebene der Brillenfassung angeordnet und im geöffneten Zustand der Brillenfassung im wesentlichen senkrecht zu der Mittellinie des Bügels.

Weiterhin bevorzugt ist die Drehebene eine Ebene, welche die Mittellinie des Bügels in einem geschlossenen und einem geöffneten Zustand der Brillenfassung enthält.

Besonders bevorzugt umfaßt die Brillenfassung auch einen zweiten Bügel und eine zweite Backe wobei
- der zweite Bügel an der zweiten Backe mittels einer zweiten Gelenkvorrichtung angelenkt ist,
- die zweite Gelenkvorrichtung zumindest ein Backengelenkelement mit zumindest einem Backenbefestigungsbereich aufweist,
- die zweite Gelenkvorrichtung zumindest ein Bügelgelenkelement mit zumindest einem Bügelbefestigungsbereich aufweist,
   -- der Backenbefestigungsbereich mit der zweiten Backe verbunden ist,
   -- der Bügelbefestigungsbereich mit dem zweiten Bügel verbunden ist,
   -- das Backengelenkelement drehbar mit dem Bügelgelenkelement verbunden ist,
   -- der Backenbefestigungsbereich relativ zu dem Bügelbefestigungsbereich verkippbar angeordnet ist und
- zwischen der zweiten Backe und dem damit verbundenen zweiten Bügel ein zweites Zwischenglied angeordnet ist.

In anderen Worten umfaßt die erfindungsgemäße Brillenfassung analog zu herkömmlichen Brillenfassungen vorzugsweise zwei Bügel und zwei Backen, ein linkes Paar einer Backe und eines Bügels und ein rechtes Paar einer Backe und eines Bügels. Das linke Paar einer Backe und eines Bügels ist ähnlich wie das recht Paar einer Backe und eines Bügels ausgebildet. Die Inklination kann aber links und recht verschieden sein, d.h. die Inklination des linken Paars einer Backe und eines Bügels kann sich von der Inklination des rechten Paars einer Backe und eines Bügels unterscheiden.

Nachfolgend wird die Erfindung beispielhaft anhand begleitender Zeichnungen bevorzugter Ausführungsformen beschrieben. Es zeigt
- Fig. 1:: einen Teilbereich einer Brillenfassung gemäß einer bevorzugten Ausführungsform der vorliegenden Erfindung;
- Fig. 2:: eine Ansicht der Ausführungsform von Figur 1 mit veränderter Inklination;
- Fig. 3:: eine Draufsicht der bevorzugten Ausführungsform einer erfindungsgemäßen Brillenfassung gemäß Figur 1;
- Fig. 4:: eine Detailansicht eines Teilbereichs von Figur 3;
- Fig. 5:: eine Detailansicht eines Bereichs der Brillenfassung gemäß Figur 1 in nicht vollständig geöffnetem Zustand; und
- Fig. 6:: eine Detailansicht der Brillenfassung gemäß Figur 5 in vollständig geöffnetem Zustand.

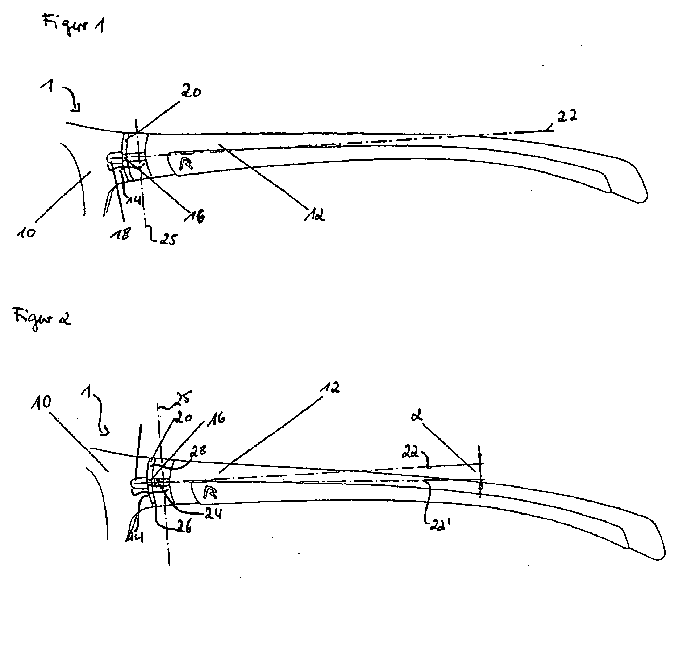

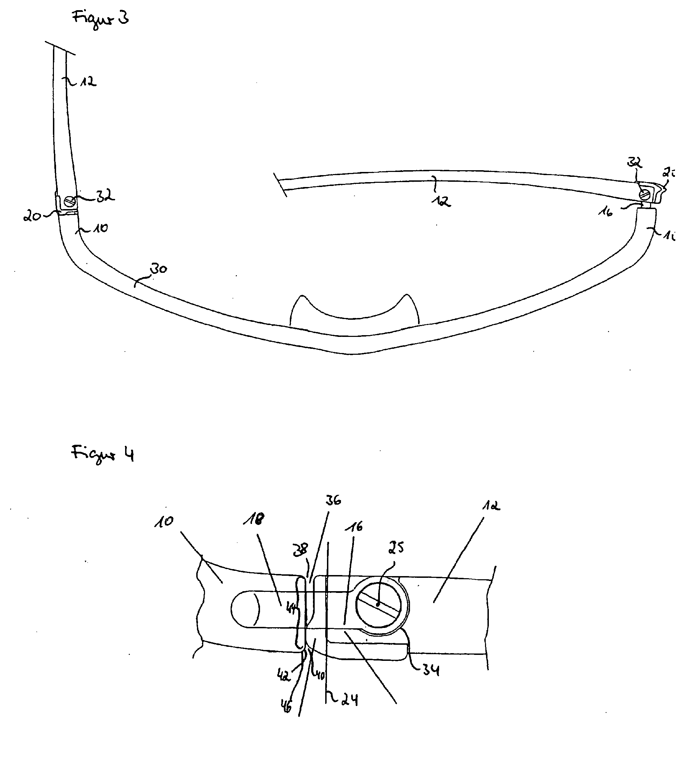

Figur 1 zeigt eine Seitenansicht einer bevorzugten Ausführungsform einer Brillenfassung 1. Die Brillenfassung 1 beinhaltet eine Backe 10 und einen Bügel 12. Der Bügel 12 ist an der Backe 10 mittels eines Gelenks 14 angelenkt, wobei ein Backengelenkelement 16 des Gelenks 14 fest mit der Backe 10 verbunden ist. Insbesondere ist ein Backenbefestigungsbereich 18 des Backengelenkelements 16 fest mit der Backe 10 verbunden. Weiterhin ist zwischen der Backe 10 und dem Bügel 12 eine rückstellfähige bzw. elastische Lippe 20 angeordnet. Die elastische Lippe 20 ist aus einem elastischen Material, wie beispielsweise Styrol-BlockCopolymeren, insbesondere sogenannten SEBS-Typen, wie Styrol/Ethylen-Butylen/Styrol, thermoplastischen Polyurethan (TPU) und/oder thermoplastischen Silikonelastomeren hergestellt. Die Backe 10 und der Bügel 12 sind beabstandet voneinander angeordnet. Die elastische Lippe 20 ist zwischen der Backe 10 und dem Bügel 12 derart angeordnet, daß in einem vollständig geöffneten Zustand der Brillenfassung 1 ein Spalt (vgl. Figur 4) zwischen der Backe 10 und dem Bügel 12 durch die elastische Lippe 20 im wesentlichen vollständig geschlossen ist. Ferner ist in Figur 1 eine Bügellängsachse bzw. Mittellinie 22 des Bügels 12 dargestellt. Wie in Figur 1 gezeigt, ist die Bügellängsachse 22 des Bügels 12 in Gebrauchsstellung im wesentlichen parallel zu einer Horizontalachse im Bezugssystem der Erde.

Die Backe 10 und der Bügel 12 können herkömmlich ausgebildet sein und sind vorzugsweise derart aneinander angelenkt, daß in einem vollständig geöffneten Zustand der Brillenfassung 1 die Backe 10 und der Bügel 12 nicht formschlüssig aneinander liegen, d.h. ein Spalt (vgl. Fig. 4) zwischen Backe 10 und Bügel 12 verbleibt. Die Backe 10 und der Bügel 12 können aus üblichen Materialien, welche gewöhnlich zur Herstellung von Brillenfassungen verwendet werden, hergestellt werden.

Figur 2 zeigt die Brillenfassung 1 der Figur 1, wobei der Bügel 12 gegen die Backe 10 verkippt ist. In Figur 2 ist sowohl die Bügellängsachse 22 des unverkippten Bügels 12 dargestellt als auch die Bügellängsachse 22' des gegen die Backe 10 gekippten Bügels 12. Der Bügel 12 wird hierbei um eine Kippachse 24 gegen die Backe 10 bzw. gegen die Bügellängsachse 22 des unverkippten Bügels 12 verkippt.

Die Bügellängsachse 22 des unverkippten Bügels 12 und die Bügellängsachse 22' des verkippten Bügels 12 schließen einen Kippwinkel α ein. Die bestimmte Anordnung der Bügellängsachse 22, wie in Figur 1 gezeigt, entspricht einer bestimmten Inklination des Bügels 12. Wird die Inklination des Bügels 12 verändert, ändert sich die Orientierung des Bügels 12 relativ zu der Backe 10. Die Bügellängsachse 22' des Bügels 12 mit veränderter Inklination schneidet die Bügellängsachse 22 des unverkippten Bügels 12 unter dem Kippwinkel α.

Die Kippachse 24 ist im wesentlichen senkrecht zu der Bügellängsachse 22 bzw. der Bügellängsachse 22' des Bügels 12 angeordnet. Ferner ist in Gebrauchsstellung der Brillenfassung 1 die Kippachse 24 vorzugsweise im wesentlichen parallel zur Horizontalrichtung im Bezugsystem der Erde.

Ferner ist in Figur 2 eine Drehachse eingezeichnet. Der Bügel 12 ist mittels des Gelenks 14 um die Drehachse 25 drehbar an der Backe 10 angeordnet. In anderen Worten kann der Bügel 12 um die Drehachse 25 gedreht werden, wodurch die Brillenfassung 1 geöffnet und geschlossen werden kann. Die Drehachse 25 ist im wesentlichen senkrecht zu der Mittellinie 22 bzw. 22' des Bügels 12.

Aufgrund des Kippens des Bügels 12 relativ zu der Backe 10 wird ein unterer Bereich 26 der elastischen Lippe 20 gestaucht, ein oberer Bereich 28 der elastischen Lippe 20 hingegen kann sich aufgrund der Elastizität der Lippe 20 ausdehnen. In anderen Worten ändert sich durch Änderung der Inklination des Bügels 12 bzw. der Bügellängsachse 22 bzw. 22' die Breite des Spaltes (vgl. Figur 4). Die Änderung der Breite wird jedoch durch die elastische Lippe 20 ausgeglichen, d.h. die elastische Lippe 20 wird dem Spalt (vgl. Figur 4) entsprechend elastisch verformt, wodurch auch eine wiederholte Veränderung des Spaltes möglich ist.

Da in dem in Figur 1 gezeigten Zustand der vollständig geöffneten Brillenfassung 1 die Backe 10 und der Bügel 12 nicht formschlüssig aneinander angeordnet sind, sondern voneinander beabstandet sind, kann der Bügel 12 gegen die Backe 10 verkippt werden, wobei keine Bearbeitung, wie beispielsweise ein Wegschleifen von Bügelmaterial in einem Bereich, welcher dem unteren Bereich 26 der elastischen Lippe 20 entspricht, notwendig ist. Vielmehr ermöglicht die elastische Lippe 20, den Bügel 12 relativ zu der Backe 10 in eine im wesentlichen beliebige Position zu verkippen, ohne daß ein von der Seite sichtbarer Freiraum zwischen der Backe 10 und dem Bügel 12 entsteht.

Figur 3 zeigt eine Draufsicht einer Brillenfassung 1 gemäß Figur 1. Die Brillenfassung 1 umfaßt zwei Bügel 12, zwei Backen 10 und einen Fassungsrand 30. Ferner ist in Figur 3 ein zu jedem Bügel 12 gehöriges Bügelgelenkelement 32 dargestellt. Weiterhin zeigt Figur 3 ein mit dem jeweiligen Bügelgelenkelement 32 verbundenes Backengelenkelement 16. An jedem Bügel 12 ist eine elastische Lippe 20 angeordnet. In der in der Figur 3 gezeigten Brillenfassung 1 ist der in der Ansicht rechte Bügel 12 geschlossen. Die an dem rechten Bügel 12 angeordnete elastische Lippe 20 ist in einem unverformten, entspannten Zustand dargestellt. Der in der Fig. 3 gezeigten Ansicht linke Bügel 12 hingegen ist vollständig geöffnet. Die elastische Lippe 20 wird durch Öffnen des Bügels 12 gegen die Backe 10 gepreßt und verformt.

Eine Detailansicht eines Teilbereichs des rechten Bügels 12 und der rechten Backe 10, jedoch in einem geöffneten Zustand der Brillenfassung 1, ist in Figur 4 dargestellt. Fig. 4 zeigt einen Teil der Backe 10 und des Bügels 12. An der Backe 10 ist das Backengelenkelement 16 angeordnet und mittels des Backenbefestigungsbereichs 18 fest mit der Backe 10 verbunden. Das Backengelenkelement 16 ist drehbar an das Bügelgelenkelement 32 angelenkt. Das Bügelgelenkelement 32 weist einen Bügelbefestigungsbereich 34 auf, welcher fest mit dem Bügel 12 verbunden ist. Das Backengelenkelement 16 und das Bügelgelenkelement 32 bilden das Gelenk 14. Mittels des Gelenks 14 kann die Brillenfassung 1 geöffnet bzw. geschlossen werden, wobei der Bügel 12 um die Drehachse 25 relativ zu der Backe 10 gedreht werden kann.

In Figur 4 ist die Brillenfassung 1 in einem geöffneten Zustand, d.h. mit einem geöffneten Bügel 12, dargestellt. Ferner ist in Figur 4 die elastische Lippe 20 dargestellt. Die Backe 10 und der Bügel 12 sind mittels des Gelenks 14 derart miteinander verbunden, daß bei fehlender elastischer Lippe 20 ein Spalt 36 zwischen der Backe 10 und dem Bügel 12 ausgebildet ist. Der Spalt 36 weist hierbei eine innen liegende Seite 38 und eine außen liegende Seite 40 auf. Die elastische Lippe 20 ist derart an dem Bügel 12 befestigt bzw. angeordnet, daß in einem geöffneten Zustand des Bügels 12 die elastische Lippe 20 mit einer Schulter 42 der Backe 10 in Kontakt tritt. Ferner ist in Figur 4 die Kippachse 24 gezeigt. Die Kippachse 24 ist in Gebrauchsstellung der Brillenfassung 1 vorzugsweise im wesentlichen horizontal hinsichtlich des Bezugssystems Erde angeordnet. Insbesondere liegt die Kippachse in einer Anordnungsebene des Backengelenkelements 16. Ist das Backengelenkelement 16 nicht im wesentlichen horizontal im Bezugssystem der Erde angeordnet, kann die Kippachse 24 auch, dem Backengelenkelement 16 entsprechend, nicht horizontal angeordnet sein.

Der Bügelbefestigungsbereich 34 kann um die Kippachse 24 relativ zu dem Backenbefestigungsbereich 18 gekippt werden. Hierbei wird das Backengelenkelement 16 im wesentlichen entlang der Kippachse 24 plastisch verformt, wodurch der Bügel 12 dauerhaft gegen die Backe 10 verkippt wird. Insbesondere ist das Backengelenkelement derart ausgelegt, daß nur bei großem Kraftaufwand das Backengelenkelement 16 plastisch verformt werden kann, wodurch eine unbeabsichtigte Verformung des Backengelenkelements 16 vermieden wird. Alternativ kann auch das Bügelgelenkelement 32 plastisch verformt werden, wenn beispielsweise die drehbare Lagerung des Backengelenkelements 16 und des Bügelgelenkelements 32 in oder nahe der Backe 10 angeordnet sind.

Ferner ist es möglich, daß entlang der Kippachse 24 das Backengelenkelement 16 verjüngt ist, wodurch ein Verkippen des Bügels 12 gegen die Backe 10 bevorzugt ist. Folglich ist eine Verjüngung des Backengelenkelements 16 derart ausgelegt, daß die plastische Verformung des Backengelenkelements 16 an der Stelle der Verjüngung bevorzugt durchführbar ist.

Weiterhin kann die elastische Lippe 20 auch derart ausgelegt sein, daß die elastische Lippe 20 nicht lediglich mit der Schulter 42 in Kontakt tritt, sondern eine Endfläche 44 der Backe 10 vollständig kontaktiert. Alternativ kann die elastische Lippe 20 auch an der Backe 10 anstelle des Bügels 12 angeordnet sein. Da die elastische Lippe 20 den Bügel 12 insbesondere in einem geschlossenen Zustand der Brillenfassung 1 (wie auf der rechten Seite der Figur 3 dargestellt) beispielsweise vor äußeren Einflüssen, wie Stößen, schützt, kann die elastische Lippe 20 vorzugsweise auch zweigeteilt sein. Ein Teil der elastischen Lippe 20 ist an dem Bügel 12 befestigt, ein weiterer Teil der elastischen Lippe 20 ist an der Backe 10, insbesondere an der Schulter 42, bzw. der Endfläche 44 der Backe 10 angeordnet. In einem geschlossenen Zustand der Brillenfassung 1 ist daher insbesondere eine Kante 46 der Backe 10 und eine Kante 48 des Bügels 12 vor äußeren Einflüssen, beispielsweise Stößen, geschützt.

Wird die Brillenfassung 1 geöffnet, d.h. der Bügel 12 mittels des Gelenks 14 geöffnet, kontaktiert insbesondere die elastische Lippe 20 die Schulter 42. Insbesondere werden beide Teilbereiche der elastischen Lippe 20 elastisch verformt, wobei die elastische Lippe 20 derart angeordnet sein kann, daß der Spalt 36 bei geöffnetem Bügel 20 vollständig geschlossen wird. Die elastische Lippe 20 kann aber auch derart angeordnet sein, daß, wie in Figur 4 gezeigt, der Spalt 36 lediglich an der außen liegenden Seite 40 geschlossen wird und die innen liegende Seite 38 zumindest teilweise geöffnet bleibt. Wird beispielsweise der Bügel 12 bezüglich der Kippachse 24 in Gebrauchsstellung nach unten gekippt, kann beispielsweise die innen liegende Seite 38 des Spalts 36 in einem unteren Bereich 26 der elastischen Lippe 20 vollständig geschlossen werden, während in einem oberen Bereich 26 der elastischen Lippe 20 lediglich die außen liegende Seite 40 geschlossen ist, jedoch die innen liegende Seite 38 des Spalts 36 geöffnet bleibt.

Weiterhin wird die Drehung des Bügels 12 nicht dadurch begrenzt, daß der Bügel 12 gegen die Backe 10 stößt. Vielmehr wird die Drehung vorzugsweise dadurch beschränkt, daß das Backengelenkelement 16 gegen den Bügelbefestigungsbereich 34 des Bügelgelenkelements 32 bzw. direkt gegen das Bügelgelenkelement 32 stößt. Die Drehung des Bügels 12 gegen die Backe 10 um die Drehachse 25 wird folglich nicht durch die Backe 10 bzw. den Bügel 12 eingeschränkt, sondern vielmehr durch das Gelenk 14, d.h. durch das Ineinandergreifen bzw. das Anschlagen des Backengelenkelements 16 und des Bügelgelenkelements 32.

Wie aus den Figuren 1, 2, 3 und 4 hervorgeht, ist das Backengelenkelement 16 im wesentlichen plattenförmig. Das Backengelenkelement 16 kann aber auch eine andere Form aufweisen. Insbesondere der Backenbefestigungsbereich 18 kann eine Form aufweisen, welche von einer Plattenform abweicht, beispielsweise im Querschnitt eine Kreuzform aufweist, wodurch der Backenbefestigungsbereich 18 fest mit der Backe 10 verbindbar ist.

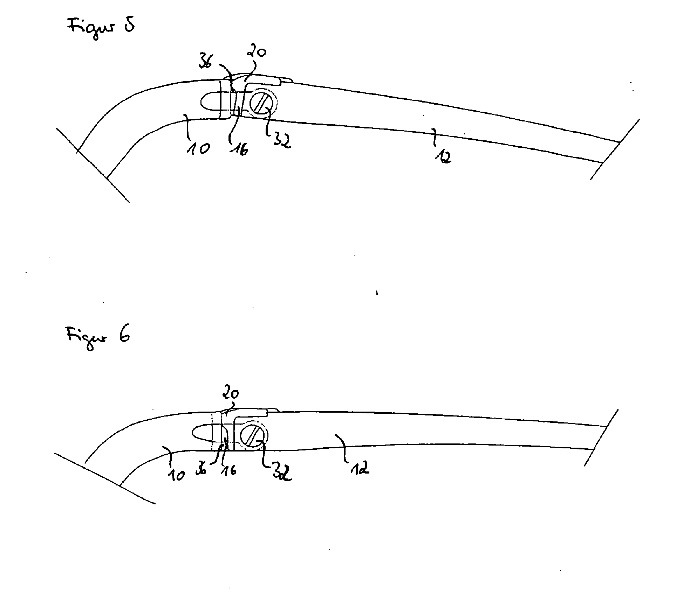

Figur 5 und Figur 6 zeigen eine Draufsicht eines Teilbereichs der Brillenfassung 1 gemäß Figur 3, wobei der in der Ansicht der Figur 3 linke Bügel 12 und linke Backe 10 dargestellt sind. In Figur 5 ist der Bügel 12 nicht vollständig geöffnet und die elastische Lippe 20 kontaktiert gerade die Schulter 42 der Backe 10. In diesem Zustand ist die elastische Lippe 20 noch nicht elastisch deformiert. Wird der Bügel 12 vollständig geöffnet, wie dies in Figur 6 gezeigt ist, wird die elastische Lippe 20 elastisch deformiert. Die Abmessungen der elastischen Lippe 20 sind derart gewählt, daß bei im wesentlichen beliebigen Kippwinkel α zwischen der Bügellängsachse 22 des Bügels 12 in Grundstellung und der Bügellängsachse 22' des Bügels 12 bei veränderter Inklination, die elastische Lippe 20 die Schulter 42 entlang der vertikalen Höhe der Schulter 42 im wesentlichen vollständig kontaktiert, d.h. im wesentlichen der Spalt 36 an der nach außen liegenden Seite 40 des Spalts 36 vollständig geschlossen ist. Der Spalt 36 ist daher von außen nicht mehr sichtbar.

### Bezugszeichenliste

- 1: Brillenfassung
- 10: Backe
- 12: Bügel
- 14: Gelenk
- 16: Backengelenkelement
- 18: Backenbefestigungsbereich
- 20: elastische Lippe
- 22: Bügellängsachse
- 22': Bügellängsachse
- 24: Kippachse
- 25: Drehachse
- 26: unterer Bereich
- 28: oberer Bereich
- 30: Fassungsrand
- 32: Bügelgelenkelement
- 34: Bügelbefestigungsbereich
- 36: Spalt
- 38: nach innen liegende Seite
- 40: nach außen liegende Seite
- 42: Schulter
- 44: Endfläche
- 46: Kante
- 48: Kante

## Patentansprüche

1. Brillenfassung (1) mit zumindest einer Backe (10) und zumindest einem Bügel (12), wobei
- der Bügel (12) an der Backe (10) mittels einer Gelenkvorrichtung (14) angelenkt ist,
- die Gelenkvorrichtung (14) zumindest ein Backengelenkelement (16) mit zumindest einem Backenbefestigungsbereich (18) aufweist,
- die Gelenkvorrichtung (14) zumindest ein Bügelgelenkelement (32) mit zumindest einem Bügelbefestigungsbereich (34) aufweist,
- der Backenbefestigungsbereich (18) mit der Backe (10) verbunden ist,
-- der Bügelbefestigungsbereich (34) mit dem Bügel (12) verbunden ist,
-- das Backengelenkelement (16) drehbar mit dem Bügelgelenkelement (32) verbunden ist und
- zumindest bereichsweise zwischen der Backe (10) und dem damit verbundenen Bügel (12) ein zumindest teilweise rückstellfähiges Zwischenglied (20) angeordnet ist,
wobei der Backenbefestigungsbereich (18) relativ zu dem Bügelbefestigungsbereich (34) verkippbar angeordnet ist, und
wobei das Backengelenkelement (16) derart um eine Drehachse (25) drehbar mit dem Bügelgelenkelement (32) verbunden ist, um ein Öffnen und ein Schließen der Brillenfassung (1) zu ermöglichen und der Backenbefestigungsbereich (18) derart um eine Kippachse (24) verkippbar angeordnet ist, um eine Inklinationsänderung des Bügels (12) zu ermöglichen, **dadurch gekennzeichnet, daß** bei geöffnetem Bügel (12) zwischen der Backe (10) und dem Bügel (12) ein Spalt (36) ausgebildet und
das Zwischenglied (20) derart elastisch verformt ist, daß zumindest eine Seite (40) des Spalts (36) vollständig geschlossen ist.

2. Brillenfassung (1) nach Anspruch 1, wobei das Zwischenglied (20) eine elastische Lippe (20) ist.

3. Brillenfassung (1) nach Anspruch 1 oder 2, wobei das Zwischenglied (20) derart angeordnet ist, daß in einem geöffneten Zustand der Brillenfassung (1) das Zwischenglied (20) die Backe (10) und den Bügel (12) jeweils an zumindest einem Punkt kontaktiert.

4. Brillenfassung (1) nach einem der vorangegangenen Ansprüche, wobei die Kippachse (24) und die Drehachse (25) verschieden zueinander orientiert sind.

5. Brillenfassung (1) nach einem der vorangegangenen Ansprüche, wobei die Gelenkvorrichtung (14) derart verformbar ausgelegt ist, um das Verkippen des Backenbefestigungsbereichs (18) relativ zu dem Bügelbefestigungsbereich (34) zu ermöglichen.

6. Brillenfassung (1) nach einem der vorangegangenen Ansprüche, wobei das Backengelenkelement (16) und/oder das Bügelgelenkelement (32) derart verformbar ausgelegt ist, um ein Verkippen des Backenbefestigungsbereichs (18) relativ zu dem Bügelbefestigungsbereich (34) zu ermöglichen.

7. Brillenfassung (1) nach einem der vorangegangenen Ansprüche, wobei zumindest ein Abschnitt des Zwischenglieds (20) in einem geöffneten Zustand der Brillenfassung (1) formschlüssig zwischen der Backe (10) und dem Bügel (12) angeordnet ist.

8. Brillenfassung (1) nach einem der vorangegangenen Ansprüche, wobei die Gelenkvorrichtung (14) ausgelegt ist, eine Drehung des Backengelenkelements (16) relativ zu dem Bügelgelenkelement (32) zu beschränken.

9. Brillenfassung (1) nach einem der vorangegangenen Ansprüche, wobei das Zwischenglied (20) an der Backe (10) und/oder an dem Bügel (12) angeordnet ist.

10. Brillenfassung (1) nach einem der vorangegangenen Ansprüche, wobei die Kippachse (24) im wesentlichen senkrecht zu einer Mittellinie (22, 22') des Bügels (12) orientiert ist.

11. Brillenfassung (1) nach einem der vorangegangenen Ansprüche, wobei die Kippachse (24) in einer Drehebene der Brillenfassung (1) angeordnet ist und im geöffneten Zustand der Brillenfassung (1) im wesentlichen senkrecht zu einer Mittellinie (22, 22') des Bügels (12) ist.

12. Brillenfassung (1) nach einem der vorangegangenen Ansprüche, wobei die Drehebene eine Ebene ist, welche die Mittellinie (22, 22') des Bügels (12) in einem geschlossenen und einem geöffneten Zustand der Brillenfassung (1) enthält.

## Claims

1. Spectacle frame (1) having at least one end piece (10) and at least one temple (12),
- the temple (12) being articulated on the end piece (10) by means of a hinge device (14),
- the hinge device (14) having at least one end piece hinge element (16) with at least one end piece attachment region (18),
- the hinge device (14) having at least one temple hinge element (32) with at least one temple attachment region (34),
-- the end piece attachment region (18) being connected to the end piece (10),
-- the temple attachment region (34) being connected to the temple (12),
-- the end piece hinge element (16) being connected rotatably to the temple hinge element (32), and
- an intermediate member (20), which is at least partially capable of restoration, being disposed at least in regions between the end piece (10) and the temple (12) connected thereto,
the end piece attachment region (18) being disposed tiltably relative to the temple attachment region (34), and
the end piece hinge element (16) being connected rotatably about an axis of rotation (25) to the temple hinge element (32) so as to make possible opening and closing of the spectacle frame (1) and the end piece attachment region (18) being disposed tiltably about a tilting axis (24) so as to make possible a change in inclination of the temple (12), **characterised in that**,
when the temple (12) is opened, a gap (36) is formed between the end piece (10) and the temple (12) and the intermediate member (20) is elastically deformed such that at least one side (40) of the gap (36) is completely closed.

2. Spectacle frame (1) according to claim 1, the intermediate member (20) being an elastic lip (20).

3. Spectacle frame (1) according to claim 1 or 2, the intermediate member (20) being disposed such that, in an opened state of the spectacle frame (1), the intermediate member (20) contacts the end piece (10) and the temple (12) respectively at at least one point.

4. Spectacle frame (1) according to one of the preceding claims, the tilting axis (24) and the axis of rotation (25) being orientated differently relative to each other.

5. Spectacle frame (1) according to one of the preceding claims, the hinge device (14) being designed deformably so as to make possible the tilting of the end piece attachment region (18) relative to the temple attachment region (34).

6. Spectacle frame (1) according to one of the preceding claims, the end piece hinge element (16) and/or the temple hinge element (32) being designed deformably so as to make possible a tilting of the end piece attachment region (18) relative to the temple attachment region (34).

7. Spectacle frame (1) according to one of the preceding claims, at least one portion of the intermediate member (20) being disposed, in an opened state of the spectacle frame (1), in a form fit between the end piece (10) and the temple (12).

8. Spectacle frame (1) according to one of the preceding claims, the hinge device (14) being designed to restrict rotation of the end piece hinge element (16) relative to the temple hinge element (32).

9. Spectacle frame (1) according to one of the preceding claims, the intermediate member (2) being disposed on the end piece (10) and/or on the temple (12).

10. Spectacle frame (1) according to one of the preceding claims, the tilting axis (24) being orientated essentially perpendicularly to a central line (22, 22') of the temple (12).

11. Spectacle frame (1) according to one of the preceding claims, the tilting axis (24) being disposed in a plane of rotation of the spectacle frame and, in the opened state of the spectacle frame (1), being essentially perpendicular to a central line (22, 22') of the temple (12).

12. Spectacle frame (1) according to one of the preceding claims, the plane of rotation being a plane which contains the central line (22, 22') of the temple (12) in a closed and an opened state of the spectacle frame (1).

## Revendications

1. Monture de lunette (1) comportant au moins une joue (10) et au moins une branche (12),
- la branche (12) étant articulée à la joue (10) au moyen d'un dispositif d'articulation (14)
- le dispositif d'articulation (14) comportant au moins un élément d'articulation à la joue (16) avec au moins une zone de fixation à la joue (18),
- le dispositif d'articulation (14) comportant au moins un élément d'articulation à la branche (32) avec une zone de fixation à la branche (34),
- - la zone de fixation à la joue (18) étant reliée à la joue (10),
- - la zone de fixation à la branche (34) étant reliée à la branche (12),
- - l'élément d'articulation à la joue (16) étant relié de manière rotative à l'élément d'articulation à la branche (32), et
- un élément intermédiaire (20), apte à revenir au moins partiellement en position initiale, est disposé au moins dans certaines zones entre la joue (10) et la branche (12) reliée à cette dernière,
la zone de fixation à la joue (18) étant disposée de manière à pouvoir basculer par rapport à la zone de fixation à la branche (34),
l'élément d'articulation à la joue (16) étant assemblé à l'élément d'articulation à la branche (32) de manière à pouvoir tourner autour d'un axe de rotation (25), pour permettre l'ouverture et la fermeture de la monture de lunette (1), et la zone de fixation à la joue (18) étant disposée de manière à pouvoir basculer autour d'un axe de basculement (24), pour permettre un changement d'inclinaison de la branche,
**caractérisée en ce qu'**une fente (36) est formée entre la joue (10) et la branche (12) lorsque la branche (12) est ouverte, et l'élément intermédiaire (20) est déformé élastiquement de telle sorte qu'au moins un côté (40) de la fente (36) est totalement fermé.

2. Monture de lunette (1) selon la revendication 1, selon laquelle l'élément intermédiaire (20) est une lèvre (20) élastique.

3. Monture de lunette (1) selon la revendication 1 ou 2, selon laquelle l'élément intermédiaire (20) est disposé de telle sorte que, dans la position ouverte de la monture de lunette (1), l'élément intermédiaire (20) entre en contact avec la joue (10) et la branche (12) respectivement au niveau d'au moins un point.

4. Monture de lunette (1) selon l'une quelconque des revendications précédentes, selon laquelle l'axe de basculement (24) et l'axe de rotation (25) sont orientés différemment l'un par rapport à l'autre.

5. Monture de lunette (1) selon l'une quelconque des revendications précédentes, selon laquelle le dispositif d'articulation (14) est configuré de manière déformable de telle sorte qu'il permet le basculement de la zone de fixation à la joue (18) par rapport à la zone de fixation à la branche (34).

6. Monture de lunette (1) selon l'une quelconque des revendications précédentes, selon laquelle l'élément d'articulation à la joue (16) et/ou l'élément d'articulation à la branche (32) sont configurés de manière déformable de telle sorte qu'ils permettent un basculement de la zone de fixation à la joue (18) par rapport à la zone de fixation à la branche (34).

7. Monture de lunette (1) selon l'une quelconque des revendications précédentes, selon laquelle au moins une partie de l'élément intermédiaire (20) est disposée par conjugaison de forme entre la joue (10) et la branche (12) lorsque la monture de lunette (1) est dans une position ouverte.

8. Monture de lunette (1) selon l'une quelconque des revendications précédentes, selon laquelle le dispositif d'articulation (14) est configuré pour limiter une rotation de l'élément d'articulation à la joue (16) par rapport à l'élément d'articulation à la branche (32).

9. Monture de lunette (1) selon l'une quelconque des revendications précédentes, selon laquelle l'élément intermédiaire (20) est disposé sur la joue (10) et/ou sur la branche (12).

10. Monture de lunette (1) selon l'une quelconque des revendications précédentes, selon laquelle l'axe de basculement (24) est orienté sensiblement perpendiculairement à une ligne médiane (22, 22') de la branche (12).

11. Monture de lunette (1) selon l'une quelconque des revendications précédentes, selon laquelle l'axe de basculement (24) est disposé dans un plan de rotation de la monture de lunette (1) et est sensiblement perpendiculaire à une ligne médiane (22, 22') de la branche (12) lorsque la monture de lunette (1) est dans la position ouverte.

12. Monture de lunette (1) selon l'une quelconque des revendications précédentes, selon laquelle le plan de rotation est un plan qui, dans une position fermée et une position ouverte de la monture de lunette (1), contient la ligne médiane (22, 22') de la branche (12).
